Europäisches Patentamt

(19) European Patent Office

Office européen des brevets

(11) Veröffentlichungsnummer: **0 085 146**
**B1**

(12) # EUROPÄISCHE PATENTSCHRIFT

(45) Veröffentlichungstag der Patentschrift:
26.02.86

(51) Int. Cl.⁴: **B 62 D 13/00**

(21) Anmeldenummer: **82110256.3**

(22) Anmeldetag: **06.11.82**

(54) Lastzug.

(30) Priorität: 29.12.81 DE 3151773

(43) Veröffentlichungstag der Anmeldung:
10.08.83 Patentblatt 83/32

(45) Bekanntmachung des Hinweises auf die Patenterteilung:
26.02.86 Patentblatt 86/9

(84) Benannte Vertragsstaaten:
AT DE FR GB NL SE

(56) Entgegenhaltungen:
EP - A - 0 031 596
DE - A - 2 808 173
DE - C - 174 865
DE - C - 942 784

AUTOMOTIVE ENGINEER. Band 6, Nr. 6, Dezember 1981
Southend-on-Sea B. GODWIN "Continental comment; A
short look at couplings" Seite 52

(73) Patentinhaber: ACKERMANN-FRUEHAUF Corporation &
Co oHG, Ludwig-Richter Strasse 1-9,
D-5600 Wuppertal 11 (DE)

(72) Erfinder: Thiele, Bernd, Schlüssel 59,
D-5600 Wuppertal 11 (DE)

(74) Vertreter: König, Reimar, Dr.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1 (DE)

**Beschreibung**

Die Erfindung betrifft einen Lastzug aus einem wenigstens zweiachsigen Motorwagen und einem wenigstens zweiachsigen, mit dem Motorwagen über eine an einem Anhänger drehring seitenunbeweglich angreifende, mit ihrer dem Motorwagen zugewandten Spitze in der Längsmittelebene des Motorwagens seitenunbeweglich, aber um eine senkrechte Achse schwenkbar angeordnete Zuggabel verbundenen Anhänger, sowie einer einerseits mit dem Motorwagen verbundenen, in seiner Längsmittelebene um wenigstens einen Punkt seitenunbeweglich geführten und andererseits mit der Anhängervorderachslenkung verbundenen Lenkstange.

Ein derartiger Lastzug ist in der europäischen Patentanmeldung EP—A—0 031 596 beschrieben. Bei diesem Lastzug ist die Anhängervorderachse in einer eigenen, von der Drehlagerung der Zuggabel unabhängigen Drehlagerung angeordnet, wobei die Zuggabel in üblicher Weise seitenunbeweglich an der Drehlagerung im Anhänger einerseits und um eine senkrechte Achse schwenkbar mit ihrem Auge in einer üblichen Anhängerkupplung am Heck des Motorwagens gekupplet ist. Zusätzlich ist eine analoge Gable seitenunbeweglich um eine waagerechte Schwenkachse, die durch die Anhängerkupplung im Motorwagenheck verläuft, am Motorwagen befestigt, deren Kupplungsauge mit einer Teleskopstange gekuppelt ist. Die Teleskopstange ist verschiebbar, in einem Rohr gelagert, das mit der Anhängervordersachsdrehlagerung starr verbunden ist, so daß bei Kurvenfahrten durch die Winkelbewegung des Anhängers zum Motorwagen der Anhänger mit der Zuggabel nur gezogen, aber durch die Lenkgabel gelenkt wird. Diese Anordnung erlaubt es, den Anhänger kürzer an den Motorwagen anzukuppeln, wodurch bei gleicher Gesamtlänge des Lastzuges Ladefläche gewonnen wird. Das Anhängerheck durchfährt zudem Kurven auf einem größeren Kurvenradius als Anhänger mit üblicher Länge.

Die genannten Vorteile werden allerdings mit einem erheblichen baulichen und betrieblichen Aufwand erkauft; denn es befinden sich zwei gleichartige Gabeln zwischen dem Motorwagen und dem Anhänger, und zwar die Zuggabel und die Lenkgabel. Diese Gabeln sind entgegengesetzt zueinander gerichtet und führen zu Schwierigkeiten, wenn ein Anhänger mit einem Motorwagen gekuppelt werden soll, da zunächst die Lenkgabel mit dem Motorwagen und dann anschließend die Lenkgable mit der Teleskopstange am Anhänger sowie die Zuggabel mit der Anhängerkupplung am Motorwagen gekuppelt werden müssen. Die Kupplungsaugen müssen hierbei in bezug auf die entsprechenden Kupplungen am Motorwagen und am Anhänger ausgerichtet werden. Zwar geht das Ausrichten der Zuggabel, die ja nicht auf die Anhängervorderachse wirkt, relativ leicht vonstatten, jedoch ist ein Ausrichten der Lenkgabel relativ zum Motorwagen gar nicht möglich, so daß hierfür nur ein Ausrichten der Kupplung an der Teleskopstange infrage kommt, was wegen deren Verbindung mit der lenkbaren Anhängervorderachse mit Schwierigkeiten verbunden ist. Ein weiterer Nachteil dieses bekannten Lastzuges ist daher darin zu sehen, daß sich die übereinander liegenden Gabeln gegenseitig berühren und stören, wenn aufgrund von Fahrbahnunebenheiten eine Verwindung des Motorwagens gegenüber dem Anhänger eintritt. Schließlich läßt sich der Motorwagen nur nach Abmontieren der Lenkgabel und der Anhänger überhaupt nicht mit üblichen Anhängern bzw. Motorwagen kuppeln, da die Anhängerlenkung ausschließlich in der beschriebenen Weise mit entsprechend eingerichteten Motorwagen arbeitet.

In der deutschen Offenlegungsschritt DE—A— 28 08 173 wird des weiteren ein Lastzug mit einer Eingelenkkupplung zwischen dem Motorwagen und dem Anhänger und mit einem vorn am Anhänger liegenden Gelenkpunkt und einer im Bereich des Gelenkpunktes angeordneten lenkbaren Anhängerachse beschrieben. Die Zuggabel ist mit dem Motorwagen seitenunbeweglich verbunden und wirkt mit einer Lenkstange zusammen, die einerseits mit dem schwenkbaren Anhängeraufbau und andererseits mit der Anhängervorderachslenkung verbunden ist. Auf diese Wiese läuft die lenkbare Anhängervorderachse mit ihrem Mittelpunkt stets in der Längsmittelebene des Motorwagens und wird das Einstellen der Anhängervorderräder auf den Kurvenmittelpunkt durch das Ausschwenken des Anhängers gesteuert, während beim Lastzug gemäß der europäischen Patenanmeldung EP— A—0 031 596 die Lenkbewegung der lenkbaren Anhängervorderräder durch die seitenunbewegliche Lenkstange und die schwenkbare Zuggabel gesteuert wird.

Der Erfindung liegt daher die Aufgabe zugrunde, eine Verbindung zwische Motorwagen und Anhänger zu schaffen, die bei geringem baulichen Aufwand ein einfaches Kuppeln ohne schwieriges Ausrichten gestattet. Außerdem sollte es möglich sein, den Motorwagen und/oder den Anhänger ohne Umrüsten mit einem üblichen Anhänger bzw. an einem üblichen Motorwagen zu verwenden.

Gelöst wird die se Aufgabe dadurch, daß die Lenkstange innerhalb der Zuggabel angeordnet ist und im Bereich der Zuggabelspitze um eine senkrechte Achse bezüglich der Zuggabel schwenkbar gelagert ist. Die Lenkstange ist gegenüber dem Motorwagen allenfalls um einen geringen Winkel seitenbeweglich, während die Zuggabelspitze zwar ebenfalls seitenunbeweglich, jedoch um eine senkrechte Achse schwenkbar gelagert ist. Auf diese Weise ist der Anhänger in der üblichen Weise mit der Anhängerkupplung des Motorwagens kuppelbar, und die Lenkstange wird anschließend gegenüber dem Motorwagen im wesentlichen seitenunbeweglich festgelegt. Von diesem Moment an übernimmt die Lenkstange die Lenkung der Anhängervorderachse, während die Zuggabel die Zugkraft auf den Anhänger überträgt. Da die Lenkstange innerhalb der Zuggabel angeordnet ist, können keine Störungen bei einem Verwinden des Anhängers gegenüber dem Motorwagen auftreten.

Vorzugsweise wird die Lenkstange mit dem Motorwagenheck mittels eines um eine waagerechte Achse schwenkbaren seitenunbeweglichen Überwurfbügels verbunden. Dieser Überwurfbügel kann sehr stabil und verhältnismäßig kurz gebaut sein, so daß er einerseits die Lenkkräfte auf die Lenkstange übertragen kann, andererseits aber im weggeklappten Zustand am Motorwagenheck nicht stört, so daß der Motorwagen ohne Probleme zum Ziehen eines üblichen Anhängers eingesetzt werden kann.

Die Zuggabel kann ein übliches starr verbundenes Kupplungsauge aufweisen, während die Lenkstange um eine mit Abstand vom Kupplungsauge verlaufende senkrechte Achse schwenkbar gelagert ist. Im Bereich zwischen der senkrechten Schwenkachse und der Anlenkung an der Anhängervorderachslenkung befindet sich eine Führungsöffnung in der Lenkstange für ein Kupplungselement des Überwurfbügels. Somit bewegt sich die senkrechte Schwenkachse in der Zuggabel beim Schwenken der Zuggabel gegenüber dem Motorwagen auf einem Kreisbogen um den Winkel zwischen dem Motorwagen und der Zuggabel. Die Führungsöffnung in der Lenkstange verbleibt demgegenüber in der Längsmittelebene des Motorwagens, so daß sich die Anlenkung zwischen Lenkstange und Anhängervorderachslenkung auf einem Kreisbogen um die Führungsöffnung in der Lenkstange um einen kleinen Winkel entgegengesetzt zum Schwenkwinkel der Zuggabel bewegt. Auf diese Weise wird auf die Anhängervorderachslenkung ein anderer Schwenkwinkel übertragen als auf den mit der Zuggabel verbundenen Hilfsrahmen, so daß sich die lenkbaren Anhängervorderräder auf den gemeinsamen Krümmungsmittelpunkt aller Achsen des Lastzuges einstellen.

Um auch den Anhänger an einem üblicher Motorwagen zu verwenden, kann sich zwischen der Zuggabel und der Anhängervorderachslenkung eine Verriegelung befinden und die Zuggabelspitze verlängerbar sein. Nach dem Verriegeln der Zuggabel mit der Anhängervorderachslenkung läßt sich diese nicht mehr unabhängig von der Zuggabel bewegen. In diesem Falle ergibt sich eine übliche Drehschemel- oder Achsschenkellenkung und ist es möglich, den Anhänger nach einem Verlängern der Zuggabelspitze mit einem herkömmlichen Motorwagen zu kuppeln. Andererseits gestattet es diese Verriegelung, die Lenkung der Vorderachse durch die Lenkstange zu blockieren, was beispielsweise automatisch ab einer bestimmten höheren Geschwindigkeit geschieht, um die Stabilität des Lastzuges bei Autobahnfahrt zu erhöhen.

Gemäß einer anderen Ausführung befindet sich das Kupplungsauge an einem mit der Anhängerkupplung des Motorwagens verbundenen Kupplungsrohr, mit dem eine Anlenkstange während der Fahrt verriegelt ist, die beide zusammen die Lenkstange bilden. In diesem Falle ist das Kupplungsrohr um die senkrechte Achse in der Zuggabelspitze schwenkbar gelagert und wird durch den Überwurfbügel seitenunbeweglich gegenüber der Längsmittelebene des Motorwagens festgehalten, so daß nur die Zuggabel um die senkrechte Achse schwenken kann. Auch hier übernimmt das Kupplungsrohr mit der Anlenkstange nach dem Kuppeln des Kupplungsrohrs mit der Anhängerkupplung des Motorwagens und dem seitenunbeweglichen Festlege... durch den Überwurfbügel die Lenkung der le...ren Anhängervorderachse während die Zug...ein die Zugkräfte auf den Anhänger überträgt.

Vorzugsweise ist die senkrechte Schwenkachse der Zuggabelspitze mit Abstand zur Anhängerkupplung des Motorwagens am Kupplungsrohr angeorddnet. Auf diese Weise ist es möglich, eine verlängerbare Anlenkstange, eine Verriegelung zwischen dem Kupplungsrohr und der Zuggabel sowie eine Verriegelung zwischen dem mit der Zuggabel verbundenen Drehring und der Anhängervorderachslenkung vorzusehen. Es genügt daher, die Anlenkstange von der Anhängervorderachslenkung zu lösen und mit der Zuggabel zu verriegeln sowie eine starre Verriegelung zwischen dem Drehkranz und der Anhängervorderachslenkung zu schaffen, um den Anhänger in üblicher Weise mit einem üblichen Motorwagen verwenden zu können. Eine Verlängerung der Anlenkstange kann einerseits dadurch erreicht werden, daß sich zwischen der Anlenkstange und dem Kupplungsrohr eine lösbare Schiebeverbindung befindet, so daß sich nach dem Lösen dieser Schiebeverbindung die Anlenkstange verschieben läßt, nachdem die Verbindung mit der Anhängervorderachslenkung gelöst ist, um dieses Anlenkstangenende in einem dafür in der Zuggabel angeordneten Anlenkpunkt mit der Zuggabel zu verbinden.

Eine andere Möglichkeit, die Anlenkstange zu verlängern, besteht darin, den in der Zuggabel angeordneten Anlenkpunkt für ein Anlenkstangenende mit einem Abstand zur Schwenkachse des Kupplungsrohres anzuordnen, der gleich dem Abstand dieses Anlenkstangenendes gegenüber dieser Schwenkachse ist. In diesem Falle wird die Anlenkstange nach dem Lösen der Kupplung mit der Anhängervorderachslenkung um 180° geschwenkt, so daß das zuvor für die Kupplung mit der Anhängerkupplung des Motorwagens vorgesehene Kupplungsauge in den Bereich des Anlenkpunktes gelangt und dort mittels eines Sperrzapfens festgelegt werden kann. Jetzt weist das längere Ende der Anlenkstange nach vorne, so daß die Zuggabel mit der Anlenkstange insgesamt etwa die gleiche Länge aufweist wie eine übliche Anhängerzuggabel. Voraussetzung ist stets, daß der Drehkranz und die Anhängervorderachslenkung gegeneinander verriegelt werden.

Um einen guten Geradeauslauf des Lastzuges zu erreichen, befindet sich eine teleskopartig gegen Federkraft verschiebbare Lenkkupplung an der Anlenkvorderachslenkung für die Lenkstange. Die stabilisierende Wirkung der Feder läßt sich durch eine achslastgesteuerte Luftfeder für die Lenkkupplung noch verbessern.

Bei einer weiteren Ausführung der Erfindung ist die Lenkstange axial verschiebbar an der Zuggabel geführt und dort mit einer lösbaren Seitenverriegelung versehen. Die Seitenarretierung kann aus einem die Zuggabel und die Lenkstange durchragenden lösbaren Steckzapfen und mindestens einer in eine Tasche der Zuggabel eingreifenden Arretiernase bestehen.

Die Lenkstange ist vorzugsweise um einen lösbaren Steckzapfen an der Zuggabel in bezug auf die Zuggabel verschwenkbar gelagert. Um den Anhänger ohne große Umbauarbeiten bei jeglicher Art von Motorwagen verwenden zu können, sollten in der Längsmittelebene der Zuggabel und der Lenkstange im Abstand voneinander miteinander korrespondierende Stecköffnungen für den Steckzapfen angeordnet sein. In diesem Falle fungiert der Steckzapfen einmal als Schwenkachse und zum anderen in Verbindung mit der Arretiernase in der Zuggabeltasche als Seitenarretierung der Lenkstange.

Besondere Vorteile ergeben sich, wenn die Lenkstange in einem vorzugsweisen über Lenkdämpfer an der Zuggabel abgestützten und an der Zuggabel angelenkten Schuh geführt ist. Auf diese Weise ergibt sich im Falle einer Kurzkupplung trotz des in verhältnismäßig großem Abstand vom Motorwagenheck befindlichen, in der Motorwagenlängsachse bzw. der seitenunbeweglich verlaufenden Lenkstange liegenden Drehpunkts eine hohe Lenkstabilität.

Um ein leichtes Fluchten der miteinander korrespondierenden Stecköffnungen von Lenkstange und Zuggabel zu ermöglichen, ist der Verschiebeweg der Lenkstange vorzugsweise durch einen Anschlag der Lenkstange und die in die Zuggabeltasche eingreifende Arretiernase begrenzt. Des weiteren kann die Schwenkbewegung der Lenkstange bei Rückwärtsfahrt des Lastzugs auch durch Anschläge der Zuggabel begrenzt sein.

Aus dem Vorstehenden ergibt sich, daß bei dem erfindungsgemäßen Lastzug das Kuppeln des Anhängers mit dem Motorwagen genau so einfach ist wie bei einem üblichen Lastzug; denn es genügt, rückwärts an den Anhänger heranzufahren, so daß das Kupplungsauge an der Zuggabel bzw. am Kupplungsrohr in die Anhängerkupplung einrastet. Zuvor braucht lediglich der Überwurfbügel angehoben und an der Lenkstange bzw. am Kupplungsrohr befestigt zu werden; Motorwagen und Anhänger sind dann als Einheit gekuppelt. Der Motorwagen läßt sich mit jedem beliebigen Anhänger kuppeln; bei einem üblichen Anhänger bleibt jedoch der Überwurfbügel unbenutzt. Um den Anhänger mit einem üblichen Motorwagen kuppeln zu können, genügt es, die Zuggabel bzw. die Lenkstange zu verlängern oder zu verschieben sowie die Anhängervorderachslenkung gegenüber der Lenkstange zu verriegeln, was beides mit wenigen Handgriffen zu bewerkstelligen ist.

Die Erfindung wird nachfolgend anhand mehrerer in der Zeichnung dargestellter Ausführungsbeispiele des näheren erläutert. In der Zeichnung zeigen:

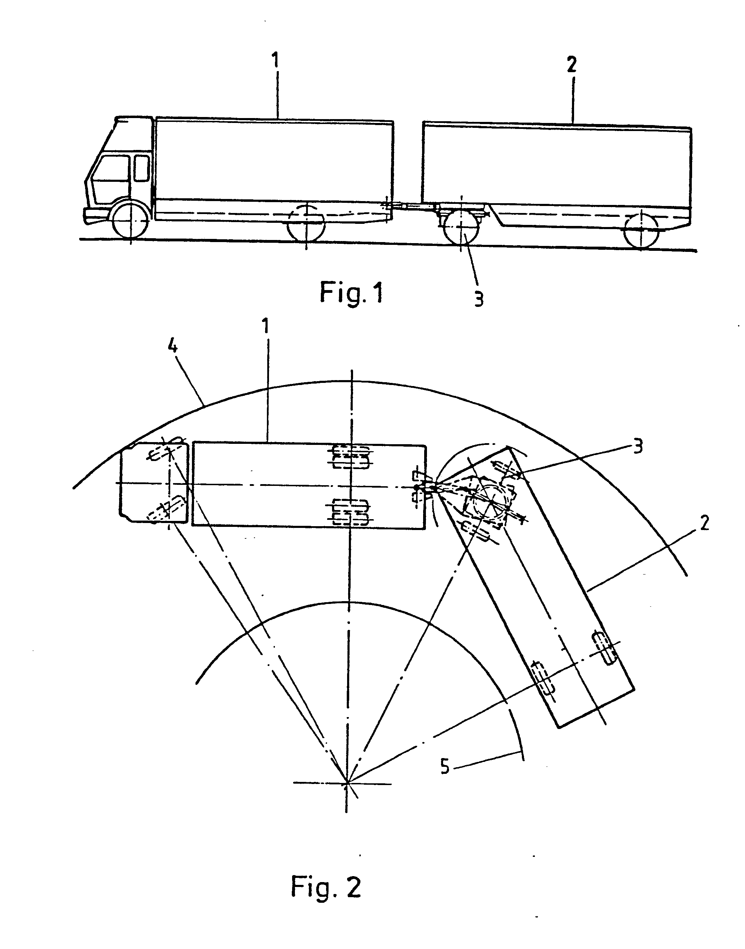

Fig. 1 eine schematische Seitenansicht eines erfindungsgemäßen Lastzuges,

Fig. 2 eine Draufsicht auf den Lastzug im gleichen Maßstab wie Fig. 1 mit Andeutung der durchfahrenen Kurvenradien,

Fig. 3 eine Seitenansicht des Motorwagenhecks und des Anhängervorderteils mit der lenkbaren Vorderachse in vergrößertem Maßstab,

Fig. 4 eine Draufsicht auf die lenkbare Vorderachse des Anhängers und die verschiedenen Kupplungselemente,

Fig. 5 eine Seitenansicht entsprechend Fig. 3 für eine lenkbare Anhängervorderachse mit Achsschenkellenkung,

Fig. 6 eine entsprechende Draufsicht,

Fig. 7 eine Seitenansicht eines Motorwagenhecks und eines Anhängervorderteils mit einer lenkbaren Vorderachse,

Fig. 8 eine Draufsicht auf die Vorrichtung gemäß Fig. 7 bei Kurvenfahrt,

Fig. 9 die schematische Seitenansicht einer anderen erfindungsgemäßen Kurzkupplung,

Fig. 10 eine Draufsicht auf die Kurzkupplung der Fig. 9,

Fig. 11 die Kupplung nach Fig. 9, 10 für den Fall einer Verwendung bei einem herkömmlichen Motorwagen,

Fig. 12 die Kurzkupplung nach Fig. 10 in der Stellung bei einer Kurvenfahrt und

Fig. 13 eine axiale Draufsicht auf die Lenkstange mit der Zuggabel aus der Richtung des Anhängers.

Ein Motorwagen 1 mit einem kurzgekuppelten Anhänger 2 ist mit einer lenkbaren Anhängervorderachse in einer Weise gekuppelt, daß ein äußerer Wendekreis 4 etwa durch die Außenvorderkante des Motorwagens beschrieben wird, während der Anhänger mit seinem Heck nach innen schwenkt. Aufgrund der besonderen Kurzkupplung des Anhängers 2 mit dem Motorwagen 1 und der besonders ausgebildeten Lenkung der Anhängervorderachse 3 schwenkt der Anhänger jedoch nicht so weit nach innen, wie es ein üblicher Anhänger tun würde, für den ein innerer Wendekreis 5 angedeutet ist. Im einzelnen ergibt sich mit Bezug auf ein Motorwagenheck 6 und ein Anhängervorderteil 7 eine unterhalb des Motorwagenhecks 6 angeordnete Anhängerkupplung 8 üblicher Bauart, die zum Kuppeln des Anhängers 2 am Motorwagen 1 dient. Dies geschieht mit einem Kupplungsrohr 9, das mit einer senkrechten Schwenkachse 11 in einer Zuggabel 10 gelagert ist. Die Zuggabel 10 ist über Anlenkaugen 14 an einem über einen Drehkranz 12 mit dem Anhängerfahrgestell verbundenen Hilfsrahmen 13 angelenkt. Über die Zuggabel 10, den Hilfsrahmen 13 und den Drehkranz 12 wird die Zugkraft von der Anhängerkupplung 8 über das Kupplungsrohr 9 auf den Anhänger übertragen.

Unterhalb des Hilfsrahmens 13 ist ein Drehschemel 15 als Träger für die lenkbare Anhängervorderachse 3 angeordnet, der mit diesem Hilfsrahmen 13 über einen Drehring 16 verbunden ist. Senkrecht zur Anhängervorderachse 3 ist im Drehschemel 15 ein Rohr 17 angeordnet, in dem eine Teleskopstange 18 verschiebbar gelagert ist. Auf das in Fahrtrichtung hintere Ende der Teleskopstange 18 wirkt eine Luftfeder 32, die vorzugsweise achslastgesteuert ist und das Bestreben hat, die Teleskopstange 18 nach hinten zu verschieben. Das in Fahrtrichtung vordere Ende der Teleskopstange 18 ist mit einer Lenkkupplung 19 versehen, mit der das hintere Ende einer Anlenkstange 20 gekuppelt ist, die andererseits verschiebefest im Kupplungsrohr 9 gelagert ist und an ihrem vorderen Ende ein Kupplungsauge zum Kuppeln mit der Anhängerkupplung 8 trägt. Das Kupplungsrohr 9 läßt sich gegenüber dem Motorwagen 1 mittels eines um eine durch die Anhängerkupplung 8 verlaufende Schwenkachse 22, verschwenkbaren Überwurfbügels 21 seitenunbeweglich festlegen. Um die Achse 22 ist das Kupplungsrohr jedoch schwenkbar; es läßt sich auch gegenüber der Anhängerkupplung 8 unter dem Überwurfbügel 21 verdrehen, so daß sich Motorwagen 1 und Anhänger 2 gegeneinander verwinden können, ohne daß dies zu Störungen Anlaß gibt.

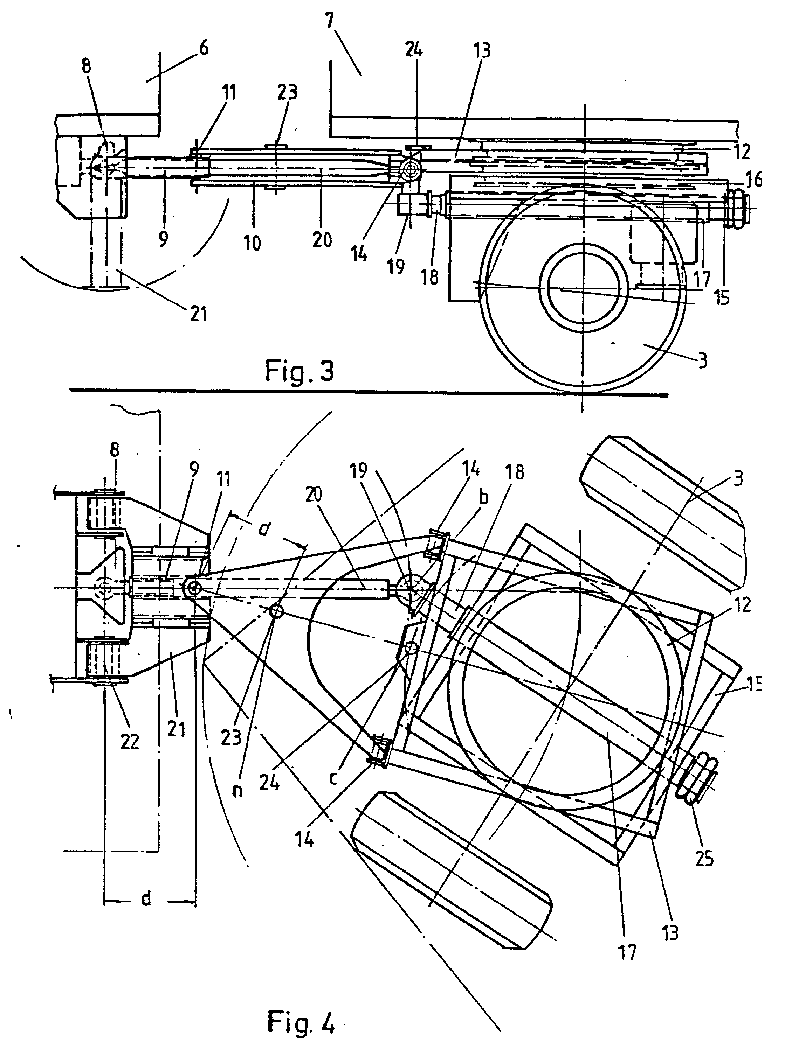

In Fig. 4 ist die Stellung der Zuggabel 10 und der lenkbaren Anhängervorderachse 3 mit Bezug auf den Motorwagen 1 bei Kurvenfahrt dargestellt. Es ist erkennbar, daß die Anlenkstange 20 aufgrund der seitenunbeweglichen Festlegung mittels des Überwurfbügels stets in der Längsmittelachse des Motorwagens verbleibt. In dieser Stellung ist die Teleskopstange 18 nach vorne aus dem Rohr gegen die Kraft der Luftfeder 15 herausgezogen, die somit das Bestreben hat, die Anhängervorderachse 3 wieder auf Geradeauslauf zu bringen.

Soll der Anhänger 2 mit einem üblichen Motorwagen ohne Überwurfbügel 21 gekuppelt werden, so ist eine verlängerte Zugvorrichtung erforderlich. Dies kann entweder dadurch geschehen, daß eine nicht dargestellte Bajonettverriegelung zwischen der Anlenkstange 20 und dem Kupplungsrohr 9 und gleichzeitig die Anlenkstange 20 von der Lenkkupplung 19 gelöst wird. Die Anlenkstange 20 kann dann im Kupplungsrohr 9 nach vorne verschoben werden, bis das hintere Kupplungsauge der Anlenkstange 20 in den Bereich eines Anlenkpunktes 23 in der Zuggabel 10 gelangt. Ein Steckbolzen wird dann durch den Anlenkpunkt 23 und das Kupplungsauge der Anlenkstange 20 hindurch gesteckt, so daß die Anlenkstange 20 starr mit der Zuggabel 10 verbunden ist. Zusätzlich muß die Lenkkupplung 19 mittels eines Steckbolzens mit einem Verriegelungsauge 24 am Hilfsrahmen 13 verriegelt werden, da bei Verwendung des Anhängers mit normaler Drehschemellenkung eine feste Verriegelung zwischen dem Hilfsrahmen 13 und dem Drehschemel 15 gegeben sein muß.

Der so veränderte Anhänger kann selbstverständlich auch mit dem dargestellten Motorwagen gekuppelt werden. In diesem Falle verbleibt der Überwurfbügel 21 in der in Fig. 3 dargestellten strichpunktierten Lage.

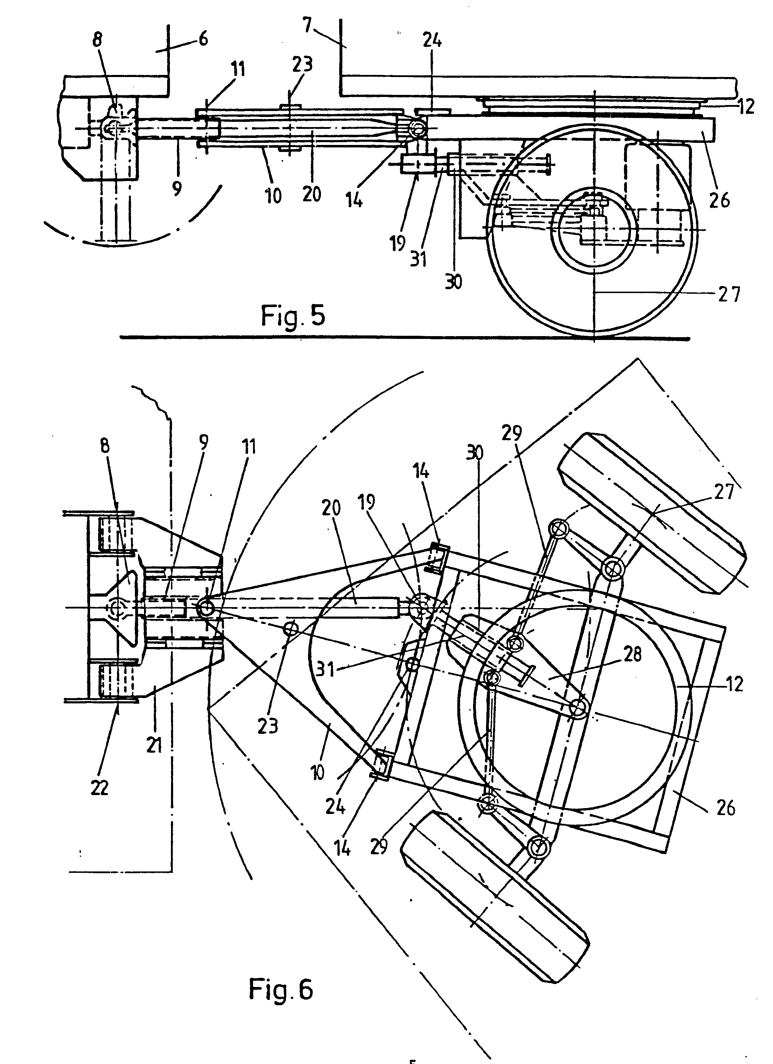

Der in Fig. 5 und 6 dargestellte Anhänger unterscheidet sich von dem in Fig. 3 und 4 dargestellten dadurch, daß er eine Achsschenkellenkung besitzt. Gleiche Elemente sind mit gleichen Bezugsziffern versehen, so daß ein mit der Zuggabel 10 verbundener Drehschemel 26 über den Drehkranz 12 mit dem Anhängervorderteil 7 verbunden ist. Am Drehschemel 26 ist eine Anhängervorderachse 27 mit Achsschenkellenkung gelagert. In der Längsmittelebene des Drehschemels 26 ist ein Lenkhebel 28 angeordnet, von dem Spurstangen 29 zu den gelenkten Rädern verlaufen. Am Lenkhebel 28 ist ein Rohr 30 befestigt, in dem eine Teleskopstange 31 verschiebbar gelagert ist. Diese Teleskopstange 31 mit der Lenkkupplung 19 ist in der vorher beschriebenen Weise mit der Anlenkstange 20 gekuppelt, so daß auch bei einer Anhängervorderachse mit Achsschenkellenkung die gleichen Verhältnisse wie bei einer Anhängervorderachse mit Drehschemellenkung gegeben sind. Das Zusammenwirken der Zuggabel 10, des Kupplungsrohres 9 und der Anlenkstange 20 mit der Anhängervorderachslenkung erfolgt in gleicher Weise wie bezüglich Fig. 3 und 4 beschrieben. Auch die Verwendungsweise des Anhängers mit einer üblichen Lenkung ist in gleicher Weise gegeben. Zu bemerken ist bezüglich des Ausführung der Fig. 5 und 6, daß die Anhängervorderachslenkung bei Verwendung in einem erfindungsgemäßen Lastzug als Achsschenkellenkung ausgebildet ist, während die Verwendung dieses Anhängers mit einem üblichen Motorwagen zur Verriegelung der Achsschenkellenkung führt und dementsprechend zu einer üblichen Drehschemellenkung.

Bezüglich der Fig. 3 und 4 ist die Verlängerung der Anlenkstange 20 mittels einer Bajonettverbindung zwischen dem Kupplungsrohr 9 und der Anlenkstange 20 beschrieben. Wird der Abstand des vorderen Kupplungsauges an der Anlenkstange 20 im Kupplungsrohr 9 zur senkrechten Schwenkachse 11 des Kupplungsrohres 9 gleich dem Abstand des Anlenkpunktes 23 von dieser Schwenkachse 11 gewählt, so läßt sich die Verlängerung der Zugeinrichtung auch dadurch bewirken, daß das hintere Anlenkauge an der Anlenkstange 20 von der Lenkkupplung 19 gelöst und die Anlenkstange 20 mit dem Kupplungsrohr 9 mit einem Winkel von 180° um die Schwenkachse 11 geschwenkt wird, so daß das ursprünglich vordere Anlenkauge in den Bereich des Anlenkpunktes 23 gelangt und dort mittels eines Verriegelungsbolzens verriegelt werden kann. In diesem Falle ist das Kupplungsrohr 9 mit der Anlenkstange 20 unlösbar verbunden. Selbstverständlich ist auch in diesem Fall eine Verriegelung zwischen der Lenkkupplung 19 und dem Drehschemel 26 über das Verriegelungsauge 24 erforderlich.

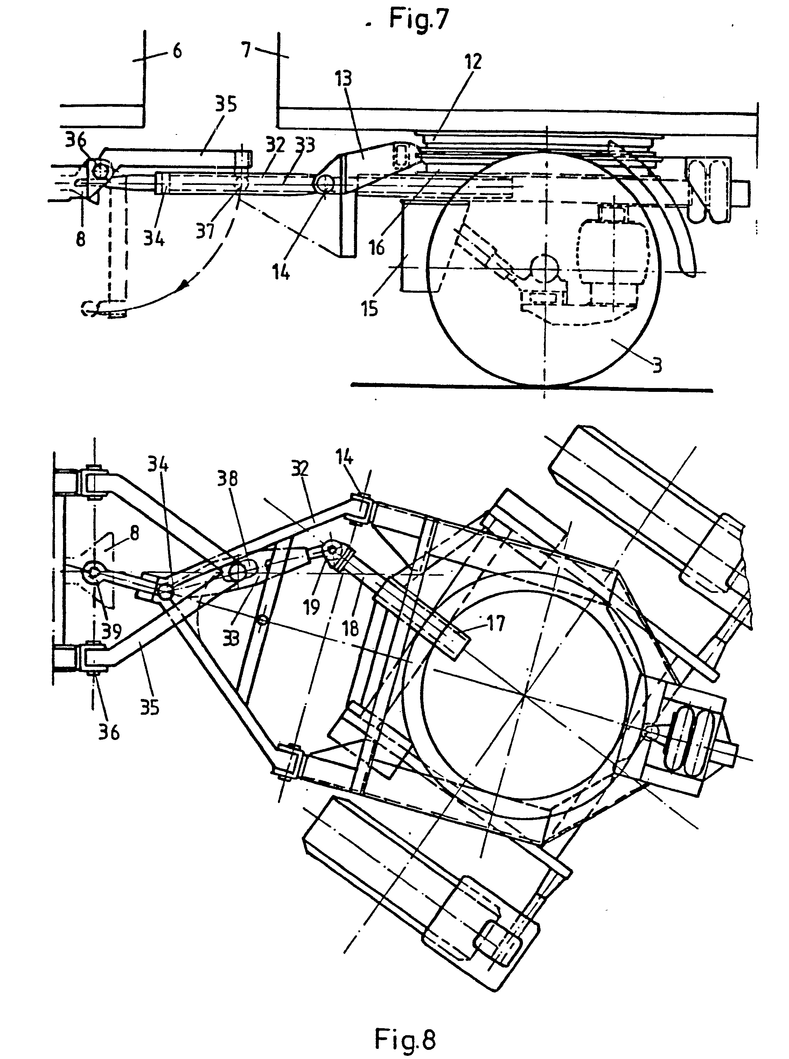

Die Ausführung gemäß Fig. 7 und 8 besteht aus einer üblichen, jedoch verkürzten Zuggabel 32 mit einem Kupplungsauge 39.

Im Bereich der Spitze der Zuggabel 32, jedoch mit Abstand zum Kupplungsauge 39 erstreckt sich eine senkrechte Schwenkachse in Form eines Zapfens 34, an dem eine Lenkstange 33 angelenkt ist. Wiederum mit Abstand zur senkrechten Schwenkachse 34 befindet sich ein Langloch 38 in der Lenkstange 33, in das eine Kupplungskugel 37 eines Überwurfbügels 35 eingreift, wenn der Bügel um seine waagerechte Schwenkachse 36 am Motorwagenheck 6 heruntergeklappt ist. Das hintere Ende der Lenkstange 33 ist in gleicher Weise, wie in Fig. 3 und 4 dargestellt, mit der Anhängervorderachslenkung gekuppelt und überträgt auf diese die aus der Winkelstellung der Zuggabel 32 gegenüber dem Motorwagen 1 resultierende Lenkbewegung.

Im Unterschied zum Kupplungsrohr 9 und der Anlenkstange 20 der Ausführung gemäß Fig. 3 bis 6, die seitenunbeweglich in der Längsmittelebene des Motorwagens festgelegt sind, ist bei der Ausführung gemäß Fig. 7 und 8 nur das die Führungsöffnung der Lenkstange 33 bildende Langloch 38 in der Längsmittelebene des Motorwagens 1 seitenunbeweglich festgelegt, so daß wie aus Fig. 8 ersichtlich, die Lenkstnage 33 bei einer Schwenkbewegung der Zuggabel 32 gegenüber dem Motorwagen um einen geringen Winkel entgegengesetzt zur Zuggabel 32 verschwenkt wird, wodurch das Lenkverhalten des Anhängers 2 allerdings nur geringfügig und keineswegs nachteilig beeinflußt wird.

Die Verriegelung der Zuggabel 32 mit der Anhängervorderachslenkung läßt sich auf verschiedene Weise erreichen, je nachdem ob diese nur für den Fall vorgesehen ist, daß der erfindungsgemäße Anhänger auch mit einem üblichen Motorwagen gekuppelt wird, oder ob die Anhängervorderachslenkung während der Fahrt zur Verbesserung des Geradeauslaufs verriegelt werden soll. Im ersteren Fall genügt es, die Lenkstange 33 durch Festlegen des Langlochs 38 gegenüber der Zuggabel 32 zu verriegeln und das Vorderende der Zuggabel 32 mit dem Kupplungsauge 39 auf das erforderliche Maß zu verlängern. Hierzu kann an der Zuggabel 32 ein nicht dargestellter klappbarer Bügel angeordnet sein, der in ähnlicher Weise wie der Überwurfbügel 35 in das Langloch 38 eingreift. Andererseits kann sich jedoch auch zwischen dem Hilfsrahmen 13 und dem Drehschemel 15 eine automatisch wirkende Verriegelung befinden, die fernbetätigt wird und bei einer Geschwindigkeit von bespielsweise über 60 km/h einrastet. Zusätzlich kann für diese Verriegelung eine Handbetätigung vorgesehen sein, so daß auch in diesem Falle ein Kuppeln des Anhängers mit einem herkömmlichen Motorwagen möglich ist.

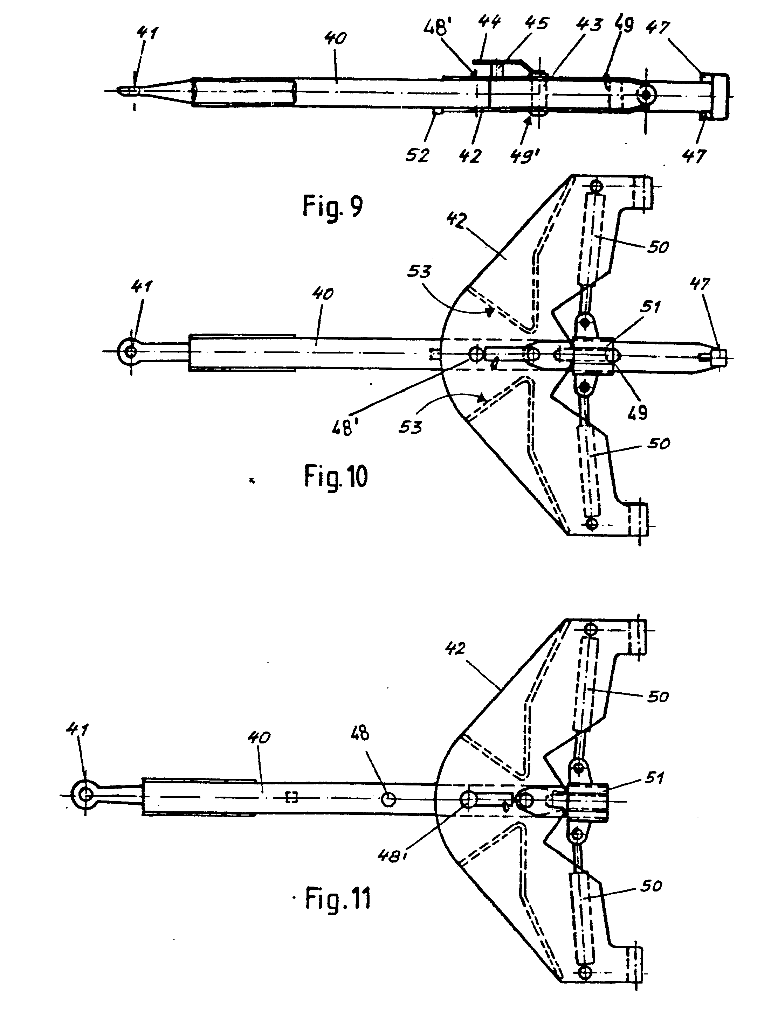

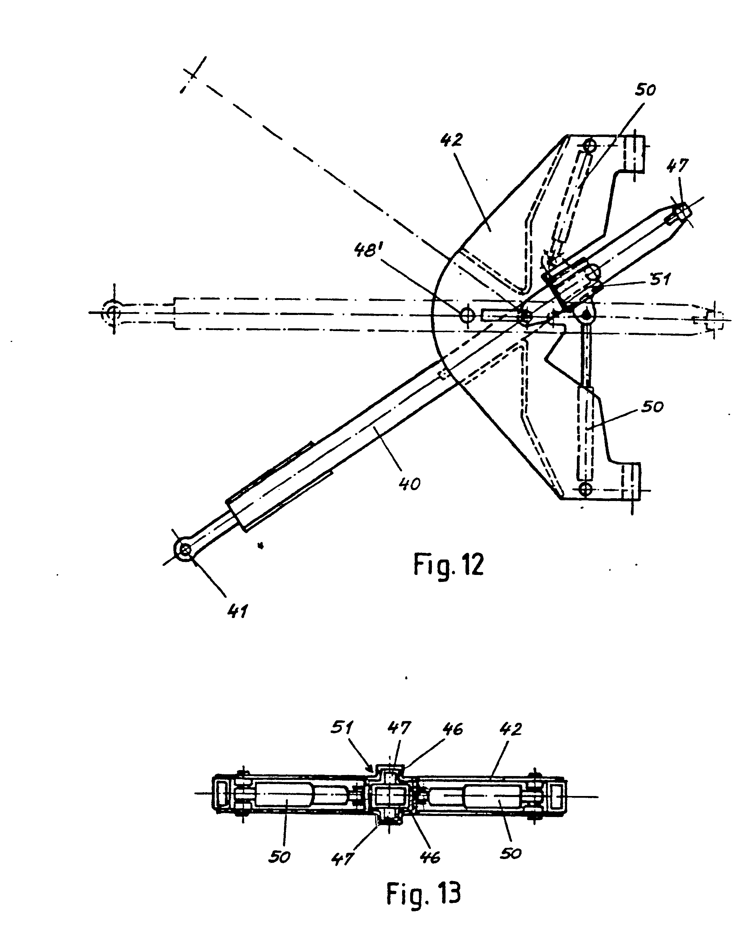

Bei dem Ausführungsbeispiel der Fig. 9 bis 13 besteht die erfindungsgemäße Kurzkupplung aus einer Lenkstange 40, die mit ihrem Kupplungsauge 41 in eine Kupplung 8 eines üblichen oder eines mit einem Überwurfbügel 21, 35 versehenen Motorwagens eingreift (Fig. 3 bis 5). Der Anhänger unterscheidet sich in diesem Fall nur durch die spezielle Gestaltung seiner Zuggabel von einem herkömmlichen Anhänger. Die Lenkstange 40 ist axial verschiebbar in einer in üblicher Weise mit dem Drehschemel eines Anhängers 2 verbundenen Zuggabel 42 axial verschiebbar geführt und besitzt außer der Seitenarretierung am Motorwagen 1 eine zusätzliche lösbare Seitenarretierung in bezug auf die Zuggabel. Diese Seitenarretierung besteht aus einem sowohl die Lenkstange 40 als auch die Zuggabel 42 durchragenden Steckzapfen 43 mit einem Handgriff 44 und einer Zapfensicherung 45 sowie zwei in Taschen 46 der Zuggabel eingreifenden Arretiernasen 47. Dabei ist die Lenkstange um den lösbaren Steckzapfen 43 verschwenkbar in bezug auf die Zuggabel gelagert. In der Längsmittelebene der Lenkstange 40 befinden sich im Abstand des Verschiebewegs der Lenkstange voneinander jeweils Stecköffnungen 48, 49 für den Steckzapfen 43, während die Zuggabel korrespondierende Stecköffnungen 48', 49' aufweist. Im Falle einer Kurzkupplung (Fig. 9, 10, 12) greift der Steckzapfen in die miteinander fluchtenden Stecköffnungen 48, 49' und bei üblicher Kupplung an einem herkömmlichen Motorwagen (Fig. 11) in die Stecköffnungen 48', 49 ein. Dazu braucht lediglich die Lenkstange 40 ausgezogen und der Steckzapfen 43 von den Zuggabelöffnungen 49' in die Zuggabelöffnungen 48' umgesteckt zu werden. Um eine hohe Lenkstabilität der erfindungsgemäßen Kurzkupplung zu erreichen, ist die Lenkstange 40 in einem an der Zuggabel 42 im Bereich der Stecköffnung 49 bzw. um deren Achse angelenkten und über Lenkdämpfer 50 abgestützten Schuh 51 verschiebbar geführt. Demgemäß läßt sich die Lenkstange nach dem Herausziehen des Steckzapfens 43 aus den Stecköffnungen 49 aus der in den Fig. 9, 10 und 12 dargestellten Lage in die Lage gemäß Fig. 11 verschieben. Der Verschiebeweg der Lenkstange wird dabei durch die Arretiernasen 47 und beim Zurückschieben der Lenkstange in die Lage der Fig. 9, 10 und 12 durch einen Anschlag 52 begrenzt. In der ausgefahrenen Stellung der Fig. 11 wird die Lenkstange 40 durch die in die Taschen 46 eingreifenden Arretiernasen 47 einerseits und den in die Stecköffnungen 48', 49 eingreifenden Arretierzapfen 43 andererseits seitenunbeweglich an der Zuggabel 42 festgelegt. Auf diese Weise ergibt sich eine übliche Anhängerkupplung für einen herkömmlichen Motorwagen ohne Seitenarretierung der Lenkstange am Motorwagen beispielsweise mit Hilfe eines um eine horizontale Achse verschwenkbaren Überwurfbügels.

Die schwenkbewegung der Lenkstange wird bei der Fahrt mit er Kurzkupplung nach den Fig. 9, 10 und 12 durch Seitenanschläge 53 begrenzt. Bis zu diesen Anschlägen kann sich die Lenkstange 40 bei der Kurvenfahrt frei um die Achse des Steckzapfens 43 drehen, in bezug auf den Motorwagen 1 ist sie jedoch seitenunbeweglich festgelegt.

## Patentansprüche

1. Lastzug aus einem wenigstens zweiachsigen Motorwagen (1) und einem wenigstens zweiachsigen, mit dem Motorwagen (1) über eine an einem Anhänger drehring (12; 16) seitenunbeweglich angreifende, mit ihrer dem Motorwagen (1) zugewandten Spitze in der Längsmittelebene des Motorwagens (1) seitenunbeweglich, aber um eine senkrechte Achse (11; 34; 43) schwenkbar angeordnete Zuggabel (10; 32; 42) verbundenen Anhänger (2) sowie einer einerseits mit dem Motorwagen (1) verbundenen, in seiner Längsmittelebene um wenigstens einen Punkt (11; 34; 43) seitenunbeweglich geführten und andererseits mit der Anhängervorderachslenkung (15, 17; 28; 29; 42) verbundenen Lenkstange (9, 20; 33; 40), dadurch gekennzehcnet, daß die Lenkstange (9, 20; 33; 40) innerhalb der Zuggabel (10; 32; 42) angeordnet ist und im Bereich der Zuggabelspitze um eine senkrechte Achse (11; 34; 43) bezüglich der Zuggabel schwenkbar gelagert ist.

2. Lastzug nach Anspruch 1, gekennzeichnet durch eine mit Abstand zu einem Kupplungsauge (39) der Zuggabel (32) verlaufende senkrechte Schwenkachse (34) der Lankstange (33) in der Zuggabel (32) und eine zwischen der senkrechten Schwenkachse (34) und einer Anlenkung (19) an einer Anhängervorderachslenkung (17, 18) angeordnete Führungsöffnung (38) in der Lenkstange (33) für ein Kupplungselement (37) eines Überwurfbügels (35).

3. Lastzug nach Anspruch 2, gekennzeichnet durch eine Verriegelung (24) zwischen der Zuggabel (32) und der Anhängervorderachslenkung (17, 18) sowie eine verlängerbare Zuggabelspitze.

4. Lastzug nach Anspruch 1, gekennzeichnet durch eine aus einem mit der Anhängerkupplung (8) des Motorwagens (1) verbindbaren Kupplungsrohr (9) und damit während der Fahrt verriegelten Anlenkstange (20) Bestehende Lenkstange.

5. Lastzug nach Anspruch 4, gekennzeichnet durch eine mit Abstand zur Anhängerkupplung (8) des Motorwagens (1) angeordnete senkrechte Schwenkachse (11) der Zuggabel (10) am Kupplungsrohr (20).

6. Lastzug nach Anspruch 5, gekennzeichnet durch eine verlängerbare Anlenkstange (20), eine Verriegelung (23) zwischen dem Kupplungsrohr (9) und der Zuggabel (10) und eine Verriegelung (24) zwischen dem mit der Zuggabel (10) verbundenen Drehkranz (12) und der Anhängervorderachslenkung (17, 18; 30, 31).

7. Lastzug nach Anspruch 6, gekennzeichnet durch eine lösbare Schiebeverbindung zwischen Anlenkstange (20) und Kupplungsrohr (9) und mit Abstand zur Schwenkachse (11) des Kupplungsrohrs (9) in der Zuggabel (10) angeordnete Anlenkpunkte (23) für ein Anlenkstangenende.

8. Lastzug nach Anspruch 6, gekennzeichnet durch einen in der Zuggabel (10) angeordneten Anlenkpunkt (23) für ein Anlenkstangenende mit einem Abstand zur Schwenkachse (11) des Kupplungsrohres (9), der gleich dem Abstand dieses Anlenkstangenendes gegenüber dieser Schwenkachse (11) ist.

9. Lastzug nach einem oder mehreren der Ansprüche 1 bis 8, gekennzeichnet durch eine teleskopartig gegen Federkraft verschiebbare Lenkkupplung (19) an der Anhängervorderachslenkung (17, 18; 30, 31) für die Lenkstange (20).

10. Lastzug nach Anspruch 9, gekennzeichnet durch eine achslastgesteuerte Luftfeder (25) für die Lenkkupplung (19).

11. Lastzug nach Anspruch 1, gekennzeichnet durch eine an der Zuggabel (42) axial verschiebbar geführte, mit einer lösbaren Seitenarretierung (43, 48; 46, 47) versehene Lenkstange (40).

12. Lastzug nach Anspruch 11, dadurch gekennzeichnet, daß die Seitenarretierung aus einem die Lenkstange (40) und die Zuggabel (42) durchragenden lösbaren Steckzapfen (43) und mindestens einer in eine Tasche (46) der Zuggabel eingreifenden Arretiernase (47) besteht.

13. Lastzug nach Anspruch 11 oder 12, dadurch gekennzeichnet, daß die Lenkstange (40) um den lösbaren Steckzapfen (43) an der Zuggabel (42) verschwenkbar gelagert ist.

14. Lastzug nach einem oder mehreren der Ansprüche 11 bis 13, dadurch gekennzeichnet, daß in der vertikalen Längsmittelebene der Zugstange (40) und der Zuggabel (42) im Abstand voneinander Stecköffnungen (48, 49; 48', 49') angeordnet sind.

15. Lastzug nach einem oder mehreren der Ansprüche 11 bis 14, dadurch gekennzeichnet, daß die Lenkstange (40) in einem an der Zuggabel (42) angelenkten und abgestützten Schuh (51) verschiebbar geführt ist.

16. Lastzug nach einem oder mehreren der Ansprüche 11 bis 15, dadurch gekennzeichnet, daß der Schuh (51) über Lenkungsdämpfer (50) an der Zuggabel (42) abgestützt ist.

17. Lastzug nach einem oder mehreren der Ansprüche 11 bis 16, dadurch gekennzeichnet, daß der Verschiebeweg der Lenkstange (40) durch einen Anschlag (52) und die Arretiernase (47) begrenzt ist.

18. Lastzug nach einem oder mehreren der Ansprüche 11 bis 17, dadurch gekennzeichnet, daß die Schwenkbewegung der Lenkstange (40) durch Seitenanschläge (53) an der Zuggabel (42) begrenzt ist.

19. Lastzug nach einem oder mehreren der Ansprüche 1 bis 10 oder 11 bis 18, gekennzeichnet durch einen am Motorwagenheck (6) um eine waagerechte Achse (22, 36) schwenkbaren seitenunbeweglichen, die Lenkstange (9, 20; 33; 40) seitenunbeweglich führenden Überwurfbügel (21, 35).

## Revendications

1. Ensemble camion-remorque constitué par un camion automobile (1) ayant au moins deux essiexu et par une remorque (2) ayant au moins deux essiexu et reliée au camion automobile (1) par l'intermédiaire d'une fourche de traction (10, 32, 42) qui est reliée, sans pouvoir se déplacer latéralement, à un anneau tournant de remorque (12, 16) et qui, avec sa pointe tournée vers le camion automobile (1) située dans le plan médian longitudinal du camion automobile (1), est montée de manière à ne pas pouvoir se déplacer latéralement, mais à pouvoir pivoter autour d'un axe vertical (11, 34, 43) et par une barre de direction (9, 20, 33, 40) reliée, d'une part, au camion automobile (1) en étant guidée, sans pouvoir se déplacer latéralement, dans le plan médian longitudinal du camion autour d'un point (11, 34, 43) au moins et d'autre part, à la direction de l'essieu avant (15, 17, 28, 29, 42) de la remorque, caractérisé en ce que la barre de direction (9, 20, 33, 40) est à l'intérieur de la fourche de traction (10, 32, 42) et est montée de manière à pouvoir pivoter par rapport à la fourche de traction dans la zone de la pointe de la fourche de traction autour d'un axe vertical (11, 34, 43).

2. Ensemble camion-remorque selon la revendication 1, caractérisé par un axe de pivotement vertical (34) de la barre de direction (32) monté dans la fourche de traction (32) à une certaine distance d'un oeillet d'accouplement (39) de la fourche de traction (32) et par une ouverture de guidage (38) ménagée dans la barre de direction entre l'axe de pivotement vertical (34) et une articulation (19) sur une direction d'essieu avant de remorque (17, 18) pour un élément d'accouplement (37) d'un étrier de raccord (35).

3. Ensemble camion-remorque selon la revendication 2, caractérisé par un verrouillage (24) entre la fourche de traction (32) et la direction d'essieu avant de remorque (17, 18) et par une pointe de fourche de traction extensible.

4. Ensemble camion-remorque selon la revendication 1, caractérisé par une barre de direction constituée par un tube d'accouplement (9) qui peut être relié à l'accouplement de remorque (8) du camion automobile et par une barre d'articulation (20) verrouillée avec lui pendant le déplacement sur route.

5. Ensemble camion-remorque selon la revendication 4, caractérisé par un axe de pivotement vertical (11) de la fourche de traction (10) sur le tube d'accouplement (20) situé à une certaine distance de l'accouplement de remorque (8) du camion automobile (1).

6. Ensemble camion-remorque selon la revendication 5, caractérisé par une barre d'articulation extensible (20), par un verrouillage (23) entre le tube d'accouplement (9) et la fourche de traction (10) et par un verrouillage (24) entre la couronne tournante (12) reliée à la fourche de traction (10) et la direction d'essieu avant (17, 18, 30, 31) de la remorque.

7. Ensemble camion-remorque selon la revendication 6, caractérisé par une liaison amovible entre la barre d'articulation (20) et le tube d'accouplement (9) et par des points d'articulation (23) d'une extrémité de barre d'articulation situés dans la fourche de traction (10) à une certaine distance de l'axe de pivotement (11) du tube d'accouplement (9).

8. Ensemble camion-remorque selon la revendication 6, caractérisé par un point d'articulation (23) d'une extrémité de barre d'articulation situé dans la fourche de traction (10) à une distance de l'axe de pivotement (11) du tube d'accouplement (9) égale à la distance comprise entre cette extrémité de barre d'articulation et l'axe de pivotement (11).

9. Ensemble camion-remorque selon l'une des revendications 1 à 8, caractérisé par un accouplement d'articulation (19) pouvant se déplacer télescopiquement en s'opposant à une force élastique et monté sur la direction d'essieu avant de remorque (17, 30, 31) pour la barre de direction (20).

10. Ensemble camion-remorque selon la revendication 9, caractérisé par un ressort pneumatique (25), commandé par la charge de l'essieu, pour l'accouplement de direction (19).

11. Ensemble camion-remorque selon la revendication 1, caractérisé par une barre de direction (40) pouvant se déplacer dans le sens axial dans la fourche de traction (42) et comportant un dispositif d'arrêt latéral amovible (43, 48, 46, 47).

12. Ensemble camion-remorque selon la revendication 11, caractérisé en ce que le dispositif d'arrêt latéral est constitué par un tenon (43) qui traverse la barre de direction (40) et la fourche de traction (42) et par au moins un bec d'arrêt (47) qui s'engage dans une partie rentrante (46) de la fourche de traction.

13. Ensemble camion-remorque selon l'une des revendications 11 ou 12, caractérisé en ce que la barre de direction (40) est montée de manière à pouvoir pivoter autour du tenon amovible (43) sur la fourche de traction (42).

14. Ensemble camion-remorque selon l'une des revendications 11 à 13, caractérisé en ce que des ouvertures d'insertion (48, 49, 48', 49') sont ménagées à une certaine distance les unes des autres dans le plan médian longitudinal vertical de la barre de direction (40) et de la fourche de traction (42).

15. Ensemble camion-remorque selon l'une des revendications 11 à 14, caractérisé en ce que la barre de direction (40) est guidée de manière à se déplacer dans un patin (51) qui prend appui et s'articule sur la fourche de traction (42).

16. Ensemble camion-remorque selon l'une des revendications 11 à 15, caractérisé en ce que la patin (51) prend appui sur la fourche de traction (42) par l'intermédiaire d'amortisseurs de direction (50).

17. Ensemble camion-remorque selon l'une des revendications 11 à 16, caractérisé en ce que le trajet de déplacement de la barre de direction (40) est limité par une butée (52) et par le bec d'arrêt (47).

18. Ensemble camion-remorque selon l'une des revendications 11 à 17, caractérisé en ce que le mouvement de pivotement de la barre de direction (40) est limité par des butées latérales (53) sur la fourche de traction (42).

19. Ensemble camion-remorque selon l'une des revendications 1 à 10 ou 11 à 18, caractérisé par un étrier de raccord (21, 35) qui est monté à la partie arrière (6) du camion automobile de manière à pouvoir pivoter autour d'un axe horizontal (22, 36) sans pouvoir se déplacer latéralement et qui guide la barre de direction (9, 20, 33, 40) sans déplacement latéral possible.

**Claims**

1. Truck-trailer combination, consisting of an at least two-axle motor vehicle (1) and of an at least two-axle trailer (2), connected with the motor vehicle (1) by a towing fork (10; 32; 42), attached in laterally immovable manner to a trailer turntable ring (12; 16) and laterally immovable in the longitudinal central plane of the motor vehicle (1) with its apex facing towards the motor vehicle (1), but pivotal about a vertical axis (11; 34; 43), and of a steering bar (9, 20; 33; 40), connected on the one hand with the motor vehicle (1), guided laterally immovably in its longitudinal central plane about at least one point (11; 34; 43), and connected on the other hand with the trailer front axle steering gear (15, 17; 28; 29; 42), characterized in that the steering bar (9, 20; 33; 40) is disposed inside the towing fork (10; 32; 42) and is journalled pivotal with respect to the towing fork about a vertical axis (11; 34; 43) in the region of the apex of the towing fork.

2. Truck-trailer combination according to claim 1, characterized by a vertical pivot axis (34) of the steering bar (33) in the towing fork (32), located at a distance from a coupling eye (39) of the towing fork (32), and by a guide opening (38), disposed between the vertical pivot axis (34) and an articulation (19) to a trailer front axis steering gear (17, 18), this opening being in the steering bar (33), for a coupling element (37) of an overrun stirrup (35).

3. Truck-trailer combination according to claim 2, characterized by a locking device (24) between the towing fork (32) and the trailer front axle steering gear (17, 18) and by an extensible towing fork apex.

4. Truck-trailer combination according to claim 1, characterized by a steering bar consisting of a coupling tube (9) which can be connected with the trailer coupling (8) of the motor vehicle (1) and of a connecting rod (20) locked thereto during travel.

5. Truck-trailer combination according to claim 4, characterized by a vertical pivot axis (11) of the towing fork (10) on the coupling tube (20) disposed at a distance from the trailer coupling (8) of the motor vehicle (1).

6. Truck-trailer combination according to claim 5, characterized by an extensible connecting rod (20), a locking device (23) between the coupling tube (9) and the towing fork (10) and a locking device (24) between the turntable ring (12) connected with the towing fork (10) and the trailer front axle steering gear (17, 18; 30, 31).

7. Truck-trailer combination according to claim 6, characterized by a releasable sliding connection between connecting rod (20) and coupling tube (9) and by articulation points (23) for one end of the connecting rod, disposed at a distance from the pivot axis (11) of the coupling tube (9) in the towing fork (10).

8. Truck-trailer combination according to claim 6, characterized by an articulation point (23) disposed in the towing fork (10) for one connecting rod end, disposed at a distance from the pivot axis (11) of the coupling tube (9) which is equal to the distance of this connecting rod end from this pivot axis (11).

9. Truck-trailer combination according to one or more of claims 1 to 8, characterized by a steering coupling (19), displaceable telescopically against spring force, at the trailer front axle steering gear (17, 18; 30, 31) for the steering bar (20).

10. Truck-trailer combination according to claim 9, characterized by an air spring (25) for the steering coupling (19), governed as a function of axle loading.

11. Truck-trailer combination according to claim 1, characterized by a steering bar (40), axially slidably guided on the towing fork (42) and furnished with a releasable lateral arresting device (43, 48; 46, 47).

12. Truck-trailer combination according to claim 11, characterized in that the lateral arresting device consists of a releasable pin (43), passing through the steering bar (40) and the towing fork (42), and at least one arresting nose (47) engaging into a pocket (46) of the towing fork.

13. Truck-trailer combination according to claim 11 or 12, characterized in that the steering bar (40) is journalled pivotal about the releasable pin (43) on the towing fork (42).

14. Truck-trailer combination according to one or more of claims 11 to 13, characterized in that pin openings (48, 49; 48', 49') are disposed spaced apart from one another in the vertical longitudinal central plane of the steering bar (40) and the towing fork (42).

15. Truck-trailer combination according to one or more of claims 11 to 14, characterized in that the steering bar (40) is slidably guided in a shoe (51), articulated to and supported by the towing fork (42).

16. Truck-trailer combination according to one or more of claims 11 to 15, characterized in that the shoe (51) is supported by steering dampers (50) on the towing fork (42).

17. Truck-trailer combination according to one or more of claims 11 to 16, characterized in that the displacement travel of the steering bar (40) is limited by a stop (52) and the arresting nose (47).

18. Truck-trailer combination according to one or more of claims 11 to 17, characterized in that the pivotal movement of the steering bar (40) is limited by lateral stops (53) on the towing fork (42).

19. Truck-trailer combination according to one or more of claims 1 to 10 or 11 to 18, characterized by an overrun stirrup (21, 35), laterally immovable and pivotally mounted about a horizontal axis (22, 36) on the motor vehicle rear (6), which guides the steering rod (9, 20; 33; 40) in laterally immovable manner.

0 085 146

Fig. 1

Fig. 2

**Fig. 3**

**Fig. 4**

Fig. 5

Fig. 6

Fig.7

Fig.8

Fig. 9

Fig. 10

Fig. 11

9

Fig. 12

Fig. 13